# EUROPEAN PATENT SPECIFICATION

(11) **EP 2 105 251 B1**
(45) Date of publication and mention of the grant of the patent: **26.09.2012**
(21) Application number: 09156219.9
(22) Date of filing: 25.03.2009
(51) Int. Cl.: B24B 55/03, B24B 9/14, B24B 13/00, B24B 55/02, B24B 57/02

(54) **Method and device for treating grinding water of lens grinding device**
Verfahren und Vorrichtung zur Behandlung von Schleifwasser einer Linsenschleifvorrichtung
Procédé et dispositif pour traiter l'eau de polissage d'un dispositif de polissage de lentilles

(30) Priority: 26.03.2008 JP 2008080181
(43) Date of publication of application: 30.09.2009
(73) Proprietor: Kabushiki Kaisha TOPCON, Tokyo 174-8580 (JP)
(72) Inventor: Hatano, Yoshiyuki, Tokyo 174-8580 (JP)
(74) Representative: Ribeiro, James Michael

(56) References cited:
- EP-A- 1 043 121
- EP-A- 1 350 598
- EP-A- 2 030 730
- JP-A- 6 114 734
- JP-A- 2003 039 323
- JP-A- 2006 007 357

## Description

### BACKGROUND OF THE INVENTION

### Field of the Invention

The present invention relates to a method and a device for treating grinding water of a lens grinding device. The lens grinding device includes a grinding water tank to store the grinding water used to grind spectacle lenses, and a device for treating grinding water to filter the grinding water.

### Description of the Related Art

In general, when grinding water treatment is performed by using a device for treating grinding water, it is necessary to prevent environmental problems. Concerning some conventional devices for treating grinding water, although a treatment of grinding chips generated when spectacle lenses are ground is fairly satisfactory to some extent, a maintenance problem may still remain to be solved.

In some conventional devices for treating grinding water, plumbing in the vicinity of a grinding water tank is complex, which results in notably unsatisfactory maintenance operation. Furthermore, an exchange operation of water in the grinding water tank, serving as the grinding water, is time-consuming. In addition, since plumbing in the vicinity of the grinding water tank is complex, in general, it is difficult to access plumbing in a spectacle store.

A simple and speedy treatment of the grinding chips, with a satisfactory separation of the grinding chips from water, is required of the device for treating grinding water. In addition, when a grinding operation of spectacle lenses is performed, grinding water exchange, bubble treatment capability and a maintenance of the device for treating grinding water are required to be enhanced.

However, a configuration of a conventional lens grinding device is heretofore known, in which in a case wherein the grinding water is circulated via a lens grinding part, a grinding water tank, a filtering device and the lens grinding part, when water needs to be supplied to the grinding water tank, a flowing passage from the filtering device to the lens grinding part is switched to the grinding water tank, and water filtered by the filtering device is circulated and returned to the grinding water tank. (For reference, see Japanese Patent Application Publication No. 2006-7357)

However, the above-mentioned lens grinding device is not capable of maintaining the satisfactory grinding chips treatment, while maintaining the satisfactory separation capability of grinding chips and water. In addition, concerning the above-mentioned lens grinding device, the workability of the grinding water exchange performed when the spectacle lens is ground is still required to be improved. Meanwhile, the bubble treatment capability and the maintenance operation is still required to be enhanced as well. EP-A-1043121 discloses a deodorization system for a lens-grinding machine. Bad-smelling air is sucked from the grinding chamber and a waste water tank for storing waste water, the bubbles and the cut chips. A volume detection sensor is arranged in the tank to prevent overflow of the waste water tank. JP-2202187066 discloses a method and apparatus for treating coolant used for lens cleaning devices. A sensor detects a water level in the grinding water tank.

### SUMMARY OF THE INVENTION

An object of the present invention is to provide a device for treating grinding water of a lens grinding device and a method for treating grinding water, which is capable of enhancing grinding water exchange, bubble treatment capability, and a maintenance operation, while maintaining a satisfactory separation capability of grinding chips and water, and a satisfactory grinding chips treatment operation.

In order to achieve the above object, the present invention provides a method and device for treating grinding water of the lens grinding device, as set out in the appended claims 1 and 5.

### BRIEF DESCRIPTION OF THE DRAWINGS

FIG. 1 illustrates a schematic structure of a device for treating grinding water of a lens grinding device according to a first embodiment of the present invention.
FIG. 2 illustrates a schematic structure a device for treating grinding water of a lens grinding device according to a second embodiment of the present invention.

### DETAILED DESCRIPTION OF THE PREFERRED EMBODIMENTS

### Embodiment 1

Preferred embodiments of the present invention will be described in detail below with reference to the accompanying drawings.

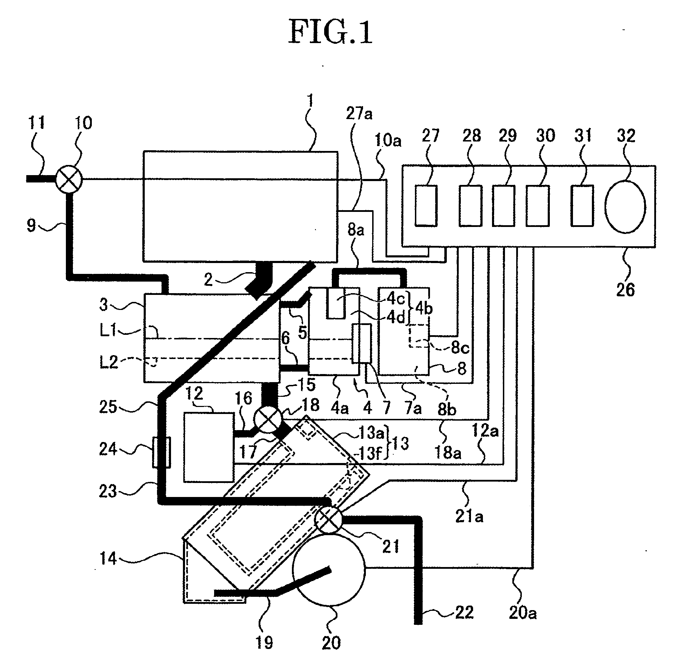

As illustrated in FIG. 1, reference numeral 1 represents a lens grinding device main body to grind the periphery of a non-ground spectacle lens by a grinding stone. When the periphery of the spectacle lens is ground by the grinding stone, grinding water is sprayed from a grinding water spraying nozzle to a contact part between the non-ground spectacle lens and the grinding stone. Thus, the grinding water cools a grinding part including the grinding stone and simultaneously washes away grinding chips generated at the grinding part. Since a commonly-known configuration can be adopted for the lens grinding device, the illustration of such a configuration is omitted for simplicity.

In addition, a water draining hose 2 is connected to the bottom of the lens grinding device main body 1. Under the lens grinding device main body 1, a primary tank 3, serving as a grinding water tank, is arranged. Grinding water including grinding chips is drained from the lens grinding device main body 1 to the primary tank 3 by the water draining hose 2.

To the primary tank 3, a cyclone type water-air separator 4 is arranged side by side. The water-air separator 4 includes a hollow separating case (separating tank) 4a extending vertically. At the upper end of the separating case 4a, a cyclone type (or a centrifugal separation type) water-air separating part 4b is arranged. The water-air separating part 4b includes a cylindrical part 4c, concentrically provided in an upper part of the water-air separator 4. A circular water separating space 4d is formed between the cylindrical part 4c and an inner peripheral surface of the upper part of the water-air separator 4. In addition, the lower end of the cylindrical part 4c is opened downward.

An upper part of the primary tank 3 is connected to the water separating space 4d of the water-air separating part 4b by an air guiding pipe 5. A lower part of the primary tank 3 is connected to a lower part of the water-air separator 4 by a connecting pipe 6 with a small diameter (i.e. with a small cross-sectional area). An open end of the air guiding pipe 5 to the water separating space 4d is provided in such a manner that air (containing mist moisture) entering the water separating space 4d from the upper part of the primary tank 3 is rotated along the inner peripheral surface of the upper part of the water-air separator 4. Thus, the mist moisture contained in the air is adhered to the inner peripheral surface of the water-air separator 4, whereby the mist moisture can be separated and eliminated from the air. The separated mist moisture is made to flow downward along the inner peripheral surface of the water-air separator 4. In addition, in the same way, bubbles generated in the primary tank 3 which enter the water separating space 4d together with the air can also be separated from the air. At a lower part of the cylindrical part 4c, a filter (not shown) is arranged.

A water level sensor 7 is arranged in the middle of the water-air separator 4 in the vertical direction. The water level sensor 7 is used to detect an upper limit L1 and a lower limit L2 of a water level of the grinding water in the primary tank 3. Since the lower part of the primary tank 3 is connected to the lower part of the water-air separator 4 by the connecting pipe 6 whose diameter is small (with a small cross-sectional area), even if a water surface of the primary tank 3 sways greatly when water is supplied to the primary tank 3 (grinding water tank), or when water is drained from the lens grinding device main body 1, a water surface of the separating case 4a does not sway greatly accordingly. Therefore, the water level sensor 7 is arranged in the separating case 4a, whereby the water level of the grinding water in the primary tank 3 can be detected with the water surface of the separating case 4a being in a stable state.

A deodorization device 8 is arranged in the vicinity of the water-air separator 4 side by side. The upper part of the water-air separator 4 and the deodorization device 8 are connected to each other via a pipe 8a. The deodorization device 8 includes a deodorant 8b and an exhaust fan 8c (air blower) to forcibly discharge air deodorized by the deodorant 8b. Here, the illustration of the deodorization device 8 is omitted for simplicity because the configuration thereof is commonly known.

Via a water supply pipe 9 and a solenoid open / close valve 10, a tap water pipe 11 is connected to the upper part of the primary tank 3. Under the primary tank 3, a compressor 12 and a filtering device 13 are arranged. The filtering device 13 includes a filtering tank 13a whose profile is formed in a rectangular shape, and a filter 13f, which is provided in the filtering tank 13a. The filtering tank 13a is obliquely arranged.

A commonly-known configuration can be adopted for the filtering device 13. A lower end of the filtering tank 13a is opened obliquely downward, to which an upper opening end of a grinding water collecting tank 14 to collect the grinding water filtered by the filter 13f is continuously arranged. The filtering tank 13a and the grinding water collecting tank 14 can be integrally formed, or be separately formed and are joined with each other air-tightly.

An upper part of a draining pipe 15 is connected to a bottom part of the primary tank 3. Via an electromagnetic selector valve 18, upper parts of branching pipes 16 and 17 are connected to a lower part of the draining pipe 15 respectively. A lower end of the branching pipe 16 is connected to an air-emitting opening (not shown) of the compressor 12. A lower end of the branching pipe 17 is connected to an upper part of the filtering device 13 and communicates with the filter 13f.

When the communication between the draining pipe 15 and the branching pipe 17 is established by the electromagnetic selector valve 18, the communication between the branching pipe 16 and the draining pipe 15 as well as the branching pipe 17 is shut off by the electromagnetic selector valve 18. When the communication between the branching pipes 16 and 17 is established by the electromagnetic selector valve 18, the communication between the draining pipe 15 and the branching pipes 16, 17 is shut off.

A sucking opening (not shown) of a water supplying and discharging pump 20 is connected to the grinding water collecting tank 14 via a water sucking pipe 19. Via an electromagnetic selector valve 21, the communication between a water discharging opening (not shown) of the water supplying and discharging pump 20 and a draining pipe 22 or a grinding water pipe 23 may be selectively established.

The draining pipe 22 is laid so as to be capable of discharging water to the sewer, etc. One end of a grinding water pipe 25 is connected to the grinding water pipe 23 via a flow regulating valve 24. Another end of the grinding water pipe 25 is connected to the grinding water spraying nozzle (not shown) of the lens grinding device main body 1.

### (Control device)

A control device 26 includes a power switch 27. Via a connecting line 27a (line of communication) such as LAN or the like, data communication between the control device 26 and the lens grinding device main body 1 can be performed. The lens grinding device main body 1 may start to grind the non-ground spectacle lens (not shown), based on signals obtained from the control device 26, when the solenoid open / close valve 10 and the electromagnetic selector valves 18, 21 are determined to be in a grinding water circulating mode, and the water level of the primary tank 3 is detected by the water level sensor 7 to be between the lower limit of L2 and the upper limit of L1. In the grinding water circulating mode, communication is established among the primary tank 3, the draining pipe 15, the branching pipe 17, the filtering device 13, the grinding water collecting tank 14, the water sucking pipe 19, the water supplying and discharging pump 20, the grinding water pipe 23, the flow regulating valve 24, the grinding water pipe 25, and the grinding water spraying nozzle (not shown) in the lens grinding device main body 1, whereby a circulation path of the grinding water is formed.

Therefore, in the grinding water circulating mode, when the water level of the primary tank 3 is detected by the water level sensor 7 to be between the lower limit L2 and the upper limit L1, the lens grinding device main body 1 starts to grind the non-ground spectacle lens after a start button (not shown) to grind the non-ground spectacle lens is pressed.

Moreover, in the lens grinding device main body 1, the number of the ground spectacle lenses is counted by a counter (not shown). When the number of the ground spectacle lenses exceeds a certain limit, the lens grinding device main body 1 displays messages of confirmation and resets a display panel every time the grinding is started.

Moreover, the lens grinding device main body 1 can perform a lens grinding setting and lens grinding. A common-known configuration can be adopted for the lens grinding device main body 1. Detection signals output from the water level sensor 7 are input to the control device 26 via a connecting line 7a.

The control device 26 includes a draining switch 28, a dewatering switch 29, a water supplying switch 30, a deodorization switch 31 and a timer 32. The control device 26 inputs control signals to the solenoid open / close valve 10, the electromagnetic selector valves 18, 21 via a connecting line 10a, a connecting line 18a and a connecting line 21a, respectively. In addition, the control device 26 inputs the control signals to the compressor 12 and the water supplying and discharging pump 20 via a connecting line 12a and a connecting line 20a, respectively.

### (Lens grinding mode)

When the lens grinding device main body 1 is in the lens grinding mode, the control device 26 shuts off the communication between the water discharging opening (not shown) of the water supplying and discharging pump 20 and the draining pipe 22 via the electromagnetic selector valve 21, whereas it establishes the communication between the water discharging opening (not shown) of the water supplying and discharging pump 20 and the grinding water pipe 23.

In addition, when the lens grinding device main body 1 is in the lens grinding mode, the control device 26 controls an operation of the electromagnetic selector valve 18, via which the control device 26 establishes the communication between the draining pipe 15 and the branching pipe 17, whereby the communication between the primary tank 3 and the filtering device 13 is established.

In the case that the lens grinding device main body 1 is in the lens grinding mode, the control device 26 operates the water supplying and discharging pump 20 when the non-ground spectacle lens is started to be ground by the grinding stone (not shown) in the lens grinding device main body 1. Thus, after the grinding water in the grinding water collecting tank 14 is sucked via the water sucking pipe 19, the water supplying and discharging pump 20 supplies the grinding water to the grinding water spraying nozzle (not shown) in the lens grinding device main body 1, via the grinding water pipe 23, the flow regulating valve 24, and the grinding water pipe 25. Thereafter, the grinding water is sprayed from the grinding water spraying nozzle to the grinding part including the grinding stone, whereby the grinding water cools the grinding part including the grinding stone and simultaneously washes away the grinding chips generated at the grinding part.

### (Draining mode)

When the draining switch 28 is switched on, the control device 26 controls the operation of the electromagnetic selector valve 21, via which the control device 26 establishes the communication between the water discharging opening (not shown) of the water supplying and discharging pump 20 and the draining pipe 22, and simultaneously shuts off the communication between the water supplying and discharging pump 20 and the grinding water pipe 23. In this case, the control device 26 controls the operation of the electromagnetic selector valve 18, via which the control device 26 establishes the communication between the draining pipe 15 and the branching pipe 17. Thus, the communication between the primary tank 3 and the filtering device 13 is established. Furthermore, when the draining switch 28 is switched on, the control device 26 operates the water supplying and discharging pump 20, whereby the water supplying and discharging pump 20 sucks the grinding water in the grinding water collecting tank 14 via the water sucking pipe 19, and then discharges the sucked grinding water to the draining pipe 22 via the electromagnetic selector valve 21.

### (Dewatering mode)

When the dewatering switch 29 is switched on, the control device 26 controls the operation of the electromagnetic selector valve 18, via which the control device 26 shuts off the communication between the draining pipe 15 and the branching pipe 17, and simultaneously establishes the communication between the branching pipes 16, 17. In this case, the control device 26 controls the operation of the electromagnetic selector valve 21, via which the control device 26 establishes the communication between the water discharging opening (not shown) of the water supplying and discharging pump 20 and the grinding water pipe 23, and simultaneously shuts off the communication between the water discharging opening (not shown) of the water supplying and discharging pump 20 and the draining pipe 22. Accompanied by such a case, the control device 26 operates the compressor 12, whereby compressed air operates on the grinding chips in the filter 13f in the filtering device 13. Simultaneously, the control device 26 terminates the operation of the water supplying and discharging pump 20.

### (Water supplying mode)

When the water supplying switch 30 is switched on, the control device 26 terminates the operation of the water supplying and discharging pump 20. Simultaneously, via the electromagnetic selector valve 21, the control device 26 shuts off the communication between the water discharging opening (not shown) of the water supplying and discharging pump 20 and the draining pipe 22; and establishes the communication between the water supplying and draining pipe 22 and the grinding water pipe 23. Furthermore, the control device 26 controls the operation of the electromagnetic selector valve 18, via which the control device 26 establishes the communication between the draining pipe 15 and the branching pipe 17; and simultaneously, shuts off the communication between the branching pipes 16 and 17.

In this water supplying mode, the communication is established among the primary tank 3, the draining pipe 15, the branching pipe 17, the filtering device 13, the grinding water collecting tank 14, the water sucking pipe 19, the water supplying and discharging pump 20, the grinding water pipe 23, the flow regulating valve 24, the grinding water pipe 25, and the grinding water spraying nozzle (not shown) in the lens grinding device main body 1, whereby the circulation path of the grinding water is formed. When the non-ground spectacle lens is ground, the water supplying mode becomes the grinding water circulating mode.

Thereafter, the control device 26 opens the solenoid open / close valve 10 to make the tap water pipe 11 communicate with the water supplying pipe 9, whereby the tap water from the tap water pipe 11 is supplied to the primary tank 3.

### (Deodorization mode)

When the deodorization switch 31 is switched on, the control device 26 operates the exhaust fan (air blower) 8c of the deodorization device 8, whereby via the air guiding pipe 5, the water air separating part 4b at the upper part of the water-air separator 4, and the pipe 8a, the air in the upper part of the primary tank 3 is absorbed and deodorized by the deodorant 8b in the deodorization device 8 and thereafter is discharged to the atmosphere.

In addition, when the water level of the grinding water in the primary tank 3 detected by the water level sensor 7 is lower than the lower limit L2 or higher than the upper limit L1, the control device 26 terminates the operation of the exhaust fan (air blower) 8c of the deodorization device 8. Therefore, the grinding water can be prevented from entering the deodorization device 8.

Next, a function of the lens grinding device with such a configuration will be illustrated.

When the power switch 27 is switched on, operation of the control device 26 is started and the detection signals output from the water level sensor 7 are input to the control device 26. In addition, when a power source (not shown) of the lens grinding device main body 1 is turned on, the data communication between the lens grinding device main body 1 and the control device 26 can be performed.

In such a state wherein the data communication between the lens grinding device main body 1 and the control device 26 can be performed, when the water supplying switch 30 is switched on to select the water supplying mode, the communication is established among the primary tank 3, the draining pipe 15, the branching pipe 17, the filtering device 13, the grinding water collecting tank 14, the water sucking pipe 19, the water supplying and discharging pump 20, the grinding water pipe 23, the flow regulating valve 24, the grinding water pipe 25, and the grinding water spraying nozzle (not shown) in the lens grinding device main body 1, whereby the circulation path of the grinding water is formed. In the water supplying mode, the control device 26 operates to supply the tap water as the grinding water from the tap water pipe 11 to the primary tank 3.

When the water level of the grinding water in the primary tank 3 is detected by the water level sensor 7 to be lower than the lower limit L2, the control device 26 opens the solenoid open / close valve 10, to supply the tap water from the tap water pipe 11 to the primary tank 3. Before the water level of the primary tank 3 becomes higher than the upper limit L1, the control device 26 closes the solenoid open / close valve 10 to shut off the tap water supply to the primary tank 3.

In addition, when the water level of the primary tank 3 is higher than the upper limit L1, the control device 26 closes the solenoid open / close valve 10, to shut off the tap water supply to the primary tank 3. Simultaneously, via the electromagnetic selector valve 21, the control device 26 makes the water discharging opening of the water supplying and discharging pump 20 communicate with the draining pipe 22, so as to drain the grinding water by the water supplying and discharging pump 20. Furthermore, during the draining of water, when the water level of the primary tank 3 is detected by the water level sensor 7 to be lower than the lower limit L2, the control device 26 terminates the operation of the water supplying and discharging pump 20, and makes the water discharging opening of the water supplying and discharging pump 20 communicate with the grinding water pipe 23, so as to stabilize the water level of the primary tank 3 to be between the lower limit L2 and the upper limit L1. The control device 26 stabilizes the water level of the primary tank 3 only when the tap water is supplied. When the spectacle lens is ground, the control device 26 does not stabilize the water level of the primary tank 3.

Thereafter, when an operation panel (not shown) of the lens grinding device main body 1 is operated to set the lens grinding device main body 1 in the lens grinding mode, the lens grinding mode is transmitted to the control device 26.

Meanwhile, via the electromagnetic selector valve 21, the control device 26 shuts off the communication between the water discharging opening (not shown) of the water supplying and discharging pump 20 and the draining pipe 22. Via the electromagnetic selector valve 21, the control device 26 maintains the water supplying mode, wherein the communication between the water discharging opening (not shown) of the water supplying and discharging pump 20 and the grinding water pipe 23 is established, as the grinding water circulating mode. In addition, the control device 26 controls the operation of the electromagnetic selector valve 18 to maintain the water supplying mode as the grinding water circulating mode. In addition, via the electromagnetic selector valve 18, the control device 26 establishes the communication between the draining pipe 15 and the branching pipe 17, whereby the communication between the primary tank 3 and the filtering device 13 is established.

In this case, when the operation panel (not shown) of the lens grinding device main body 1 is operated to start to grind the spectacle lens by the grinding stone (not shown) in the lens grinding device main body 1, a signal of the start of the lens grinding is transmitted to the control device 26. Thereafter, before the spectacle lens is started to be ground by the grinding stone (not shown) in the lens grinding device main body 1, the control device 26 operates the water supplying and discharging pump 20.

After the water supplying and discharging pump 20 sucks the grinding water in the grinding water collecting tank 14 via the water sucking pipe 19, the grinding water is supplied to the grinding water spraying nozzle (not shown) in the lens grinding device main body 1, via the grinding water pipe 23, the flow regulating valve 24, and the grinding water pipe 25. Thereafter, the grinding water is sprayed from the grinding water spraying nozzle to the grinding part including the grinding stone, whereby the grinding water cools the grinding part including the grinding stone and simultaneously washes away the grinding chips generated at the grinding part.

Together with the grinding water, the washed-away grinding chips flow into the primary tank 3 via the water draining hose 2. The grinding water in the primary tank 3 flows into the filtering device 13 via the draining pipe 15, the electromagnetic selector valve 18, and the branching pipe 17. The grinding water flowing into the primary tank 13 is collected by the grinding water collecting tank 14 after being filtered by the filter 13f. Thereafter, filtered grinding water is supplied again to the grinding water spraying nozzle (not shown) in the lens grinding device main body 1, by the water supplying and discharging pump 20, and is circulated.

Accompanied by the circulation of the grinding water, the control device 26 operates the exhaust fan (air blower) 8c of the deodorization device 8. A resultant intake negative pressure generated by the exhaust fan operates on the upper part of the water-air separator 4 via the pipe 8a and the cylindrical part 4c. Due to this intake negative pressure, the air in the upper part of the primary tank 3 is extracted into the water air separating part 4b of the upper part of the water-air separator 4, through the air guiding pipe 5. The extracted air flows into the water separating space 4d and is rotated along the inner peripheral surface of the water-air separator 4, whereby mist moisture, bubbles or the like contained in the extracted air are adhered to the inner peripheral surface of the water-air separator 4. Thereafter, the adhered moisture or the bubbles flow down along the inner peripheral surface of the water-air separator 4.

Meanwhile, after the mist moisture and the bubbles are eliminated, the air extracted from the upper part of the primary tank 3 still contains an unpleasant odor, generated at the time of the spectacle lens being ground. Such kind of air from the lower part of the cylindrical part 4c is absorbed, via the pipe 8a, by the deodorant 8b in the deodorization device 8. Thus, the unpleasant odor is absorbed and eliminated by the deodorant 8b. Eventually, after the unpleasant odor is eliminated, the air is discharged to the atmosphere.

When grinding the spectacle lens with the grinding stone is completed, a grinding completion signal is input from the lens grinding device main body 1 to the control device 26. Corresponding to the grinding completion signal, the control device 26 terminates the operation of the water supplying and discharging pump 20, accompanied by which the timer 32 is operated. When a predetermined time measured by the timer 32 lapses, the control device 26 terminates the operation of the exhaust fan (air blower) 8c of the deodorization device 8.

In addition, when the water level of the grinding water in the primary tank 3 detected by the water level sensor 7 is higher than the upper limit L1, this detection signal is input to the lens grinding device main body 1. Therefore, the control device 26 terminates the operation of the exhaust fan (air blower) 8c of the deodorization device 8, so as to prevent the grinding water from entering the deodorization device 8. The water level of the grinding water in the primary tank 3 being higher than the upper limit L1 may be caused by a case wherein the filter 13f of the filtering device 13 is clogged by the grinding chips.

In addition, the control device 26 determines the draining mode, the dewatering mode, the water supplying mode, and the deodorization mode respectively, when the draining switch 28, the dewatering switch 29, the water supplying switch 30, and the deodorization switch 31 are switched on respectively. Among the draining mode, the dewatering mode and the water supplying mode, any two of the modes cannot be executed simultaneously. The deodorization mode can be executed independently of any one of the above-mentioned three modes.

### (Draining operation)

When the draining switch 28 is switched on, the control device 26 controls the operation of the electromagnetic selector valve 21, via which the control device 26 establishes the communication between the water discharging opening (not shown) of the water supplying and discharging pump 20 and the draining pipe 22, and simultaneously shuts off the communication between the water supplying and discharging pump 20 and the grinding water pipe 23. In this case, the control device 26 controls the operation of the electromagnetic selector valve 18, via which the control device 26 establishes the communication between the draining pipe 15 and the branching pipe 17. Thus, the communication between the primary tank 3 and the filtering device 13 is established. Furthermore, when the draining switch 28 is switched on, the control device 26 operates the water supplying and discharging pump 20, whereby the water supplying and discharging pump 20 sucks the grinding water in the grinding water collecting tank 14 via the water sucking pipe 19, and then discharges the sucked grinding water to the sewer, etc. via the electromagnetic selector valve 21 and the draining pipe 22.

### (Dewatering operation)

When the dewatering switch 29 is switched on, the control device 26 controls the operation of the electromagnetic selector valve 18, via which the control device 26 shuts off the communication between the draining pipe 15 and the branching pipe 17, and simultaneously establishes the communication between the branching pipes 16, 17. In this case, the control device 26 controls the operation of the electromagnetic selector valve 21, via which the control device 26 establishes the communication between the water discharging opening (not shown) of the water supplying and discharging pump 20 and the grinding water pipe 23, and simultaneously shuts off the communication between the water discharging opening (not shown) of the water supplying and discharging pump 20 and the draining pipe 22. Accompanied by such a case, the control device 26 terminates the operation of the water supplying and discharging pump 20. Simultaneously, the control device 26 operates the compressor 12, whereby compressed air operates on the grinding chips in the filter 13f in the filtering device 13.

Thus, the grinding water contained in the grinding chips is pressed out into the grinding water collecting tank 14 by the compressed air. The dewatered grinding chips can be discarded by pulling out the filter 13f from the filtering device 13. Here, an attaching and detaching configuration of the filter 13f can be a commonlyknown one, and detailed illustration thereof is omitted.

### Embodiment 2

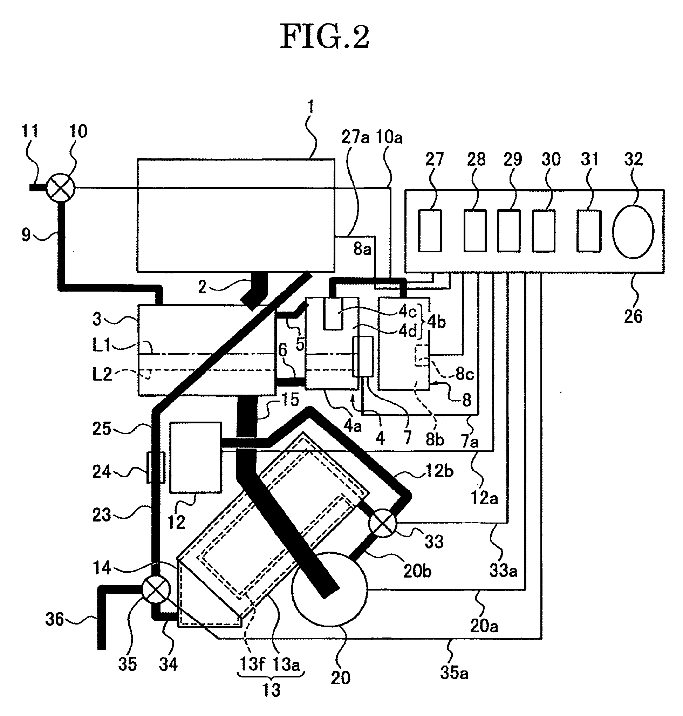

The present embodiment of the present invention will be illustrated hereinafter. In the first embodiment of the present invention, although the water discharging opening (not shown) of the water supplying and discharging pump 20 can be made to communicate either with the draining pipe 22, or with the grinding water pipe 23 by the electromagnetic selector valve 21, the configuration of the device for treating the grinding water is not confined thereto. For example, a device for treating the grinding water can also be configured as illustrated in FIG. 2.

As illustrated in FIG. 2, the draining pipe 15 illustrated in FIG. 1 is connected to a sucking opening (not shown) of the water supplying and discharging pump 20. A water discharging pipe 20b is connected to the water discharging opening (not shown) of the water supplying and discharging pump 20. An air supplying pipe 12b is connected to the compressor 12. Via an electromagnetic selector valve 33, the water discharging pipe 20b and the air supplying pipe 12b can be made to selectively communicate with the filter 13f of the filtering device 13. Via a connecting line 33a, the control device 26 inputs the control signals to the electromagnetic selector valve 33.

In addition, a grinding water pipe 34 is connected to a lower part of a grinding water collecting tank 14. Via an electromagnetic selector valve 35, a grinding water pipe 23 and a draining pipe 36 are connected to the grinding water pipe 34. Control signals from a control device 26 are input to the electromagnetic selector valve 35 via a connecting line 35a.

Furthermore, in FIG. 2, since configurations of other components are the same as those illustrated in FIG. 1, the same reference numbers are attached to similar parts illustrated in FIG. 1. The illustration of these same reference numbers is omitted for simplicity.

### (Lens grinding mode)

When the lens grinding device main body 1 is in a lens grinding mode, the control device 26 controls the operation of the electromagnetic selector valve 33, via which the control device 26 shuts off the communication between the water discharging pipe 20b of the water supplying and discharging pump 20 and the air supplying pipe 12b, and establishes the communication between the water discharging pipe 20b of the water supplying and discharging pump 20 and the filter 13f of the filtering device 13.

In addition, in the lens grinding mode, the control device 26 controls an operation of the electromagnetic selector valve 35, via which the control device 26 shuts off the communication between a grinding water pipe 34 and a draining pipe 36, and simultaneously establishes the communication between the grinding water pipe 34 and the grinding water pipe 23. Thus, the communication between the primary tank 3 and the grinding water collecting tank 14 is established.

In the lens grinding mode, the control device 26 operates the water supplying and discharging pump 20 when the non-ground spectacle lens is started to be ground by the grinding stone (not shown) in the lens grinding device main body 1. Thus, the water supplying and discharging pump 20 supplies the grinding water flowing from the primary tank 3 to the grinding water spraying nozzle (not shown) in the lens grinding device main body 1, via the filtering device 13, the grinding water collecting tank 14, the grinding water pipe 34, the electromagnetic selector valve 35, the grinding water pipe 23, the flow regulating valve 24, and the grinding water pipe 25. Thereafter, the grinding water is sprayed from the grinding water spraying nozzle to the grinding part including the grinding stone, whereby the grinding water cools the grinding part including the grinding stone and simultaneously washes away the grinding chips generated at the grinding part.

### (Draining mode)

When the draining switch 28 is switched on, the control device 26 controls the operation of the electromagnetic selector valve 33, via which the control device 26 establishes the communication between the water discharging opening pipe 20b of the water supplying and discharging pump 20 and the filter 13f in the filtering device 13, and simultaneously shuts off the communication between the water discharging opening pipe 20b of the water supplying and discharging pump 20 and the air supplying pipe 12b.

In this case, the control device 26 controls the operation of the electromagnetic selector valve 35, via which the control device 26 shuts off the communication between the draining pipe 36 and the grinding water pipe 23, and simultaneously establishes the communication between the draining pipe 36 and the grinding water pipe 34. Thus, the communication between the grinding water collecting tank 14 and the draining pipe 36 is established.

Furthermore, when the draining switch 28 is switched on, the control device 26 operates the water supplying and discharging pump 20, whereby the water supplying and discharging pump 20 supplies the grinding water in the primary tank 3 to the filter 13f in the filtering device 13. Meanwhile, the grinding water is filtered by the filter 13f, whereafter the grinding water flows into the grinding water collecting tank 14, and then is discharged to the sewer via the grinding water pipe 34, the electromagnetic selector valve 35, and the draining pipe 36.

### (Dewatering mode)

When the dewatering switch 29 is switched on, the control device 26 controls an operation of the electromagnetic selector valve 33, via which the control device 26 establishes the communication between the air supplying pipe 12b and the filter 13f in the filtering device 13, and simultaneously shuts off the communication between the water discharging pipe 20b of the water supplying and discharging pump 20 and the filter 13f in the filtering device 13.

In addition, the control device 26 controls the operation of the electromagnetic selector valve 35, via which the control device 26 shuts off the communication between the grinding water pipes 34 and 23, and simultaneously establishes the communication between the grinding water pipe 34 and the draining pipe 36. Meanwhile, the control device 26 terminates the operation of the water supplying and discharging pump 20. Simultaneously, the control device 26 operates the compressor 12, whereby compressed air operates on the grinding chips in the filter 13f in the filtering device 13, via the air supplying pipe 12b and the electromagnetic selector valve 33.

### (Water supplying mode)

When the water supplying switch 30 is switched on, the control device 26 terminates the operation of the water supplying and discharging pump 20. Simultaneously, via the electromagnetic selector valve 33, the control device 26 shuts off the communication between the water discharging pipe 20b of the water supplying and discharging pump 20 and the air supplying pipe 12b, and establishes the communication between the water discharging pipe 20b of the water supplying and discharging pump 20 and the filtering device 13. Furthermore, the control device 26 controls the operation of the electromagnetic selector valve 35, via which the control device 26 establishes the communication between the grinding water pipes 34 and 23, and simultaneously shuts off the communication between the grinding water pipe 34 and the draining pipe 36.

Thereafter, the control device 26 opens the solenoid open / close valve 10 to make the tap water pipe 11 communicate with the water supplying pipe 9, whereby the tap water from the tap water pipe 11 is supplied to the primary tank 3.

### (Deodorization mode)

When the deodorization switch 31 is switched on, the control device 26 operates the exhaust fan (air blower) 8c of the deodorization device 8, whereby via the air guiding pipe 5, the water air separating part 4b at the upper part of the water-air separator 4, and the pipe 8a, the air in the upper part of the primary tank 3 is absorbed and deodorized by the deodorant 8b in the deodorization device 8 and thereafter is discharged to the atmosphere.

In addition, when the water level of the grinding water in the primary tank 3 detected by the water level sensor 7 is lower than the lower limit L2 or higher than the upper limit L1, the control device 26 terminates the operation of the exhaust fan (air blower) 8c of the deodorization device 8. Therefore, the grinding water can be prevented from entering the deodorization device 8.

Next, a function of the lens grinding device with such a configuration will be illustrated.

When the power switch 27 is switched on, operation of the control device 26 is started and the detection signals output from the water level sensor 7 are input to the control device 26. In addition, when a power source (not shown) of the lens grinding device main body 1 is turned on, the data communication between the lens grinding device main body 1 and the control device 26 can be performed.

In such a state wherein the data communication between the lens grinding device main body 1 and the control device 26 can be performed, when the water supplying switch 30 is switched on to select the water supplying mode, the communication is established among the primary tank 3, the draining pipe 15, the water supplying and discharging pump 20, the water discharging pipe 20b, the filter 13f, the grinding water collecting tank 14, the grinding water pipes 34 and 23, the flow regulating valve 24, the grinding water pipe 25, and the grinding water spraying nozzle (not shown) in the lens grinding device main body 1, whereby a circulation path of the grinding water is formed. In the water supplying mode, the control device 26 supplies the tap water as the grinding water from the tap water pipe 11 to the primary tank 3.

When the water level of the grinding water in the primary tank 3 is detected by the water level sensor 7 to be lower than the lower limit L2, the control device 26 opens the solenoid open / close valve 10, to supply the tap water from the tap water pipe 11 to the primary tank 3. Before the water level of the primary tank 3 becomes higher than the upper limit L1, the control device 26 closes the solenoid open / close valve 10 to shut off the tap water supply to the primary tank 3.

In addition, when the water level of the primary tank 3 is higher than the upper limit L1, the control device 26 closes the solenoid open / close valve 10, to shut off the tap water supply to the primary tank 3. Simultaneously, via the electromagnetic selector valve 35, the control device 26 makes the grinding water pipe 34 communicate with the draining pipe 36, so as to drain the grinding water wherefrom by the water supplying and discharging pump 20. Furthermore, while the water is drained, when the water level of the primary tank 3 is detected by the water level sensor 7 to be lower than the lower limit L2, the control device 26 terminates the operation of the water supplying and discharging pump 20, and makes the grinding water pipe 34 communicate with the grinding water pipe 23, so as to stabilize the water level of the primary tank 3 to be between the lower limit L2 and the upper limit L1. The control device 26 stabilizes the water level of the primary tank 3 only when the tap water is supplied. When the spectacle lens is ground, the control device 26 does not stabilize the water level of the primary tank 3.

Thereafter, when an operation panel (not shown) of the lens grinding device main body 1 is operated to set the lens grinding device main body 1 in the lens grinding mode, the lens grinding mode is transmitted to the control device 26.

Meanwhile, the control device 26 controls the operation of the electromagnetic selector valve 33, to maintain a water supplying mode as the grinding water circulating mode. Here, specifically, in the water supplying mode, via the electromagnetic selector valve 33, the control device 26 shuts off the communication between the water discharging pipe 20b of the water supplying and discharging pump 20 and the air supplying pipe 12b, and simultaneously establishes the communication between the water discharging pipe 20b of the water supplying and discharging pump 20 and filter 13f in the filtering device 13. In addition, the control device 26 controls the operation of the electromagnetic selector valve 35, to maintain the water supplying mode as the grinding water circulating mode. In addition, via the electromagnetic selector valve 35, the control device 26 shuts off the communication between the grinding water pipe 34 and the draining pipe 36, and simultaneously establishes the communication between the grinding water pipes 34 and 23, whereby the communication between the primary tank 3 and the filtering device 13 is established.

In this case, when the operation panel (not shown) of the lens grinding device main body 1 is operated to start to grind the spectacle lens by the grinding stone (not shown) in the lens grinding device main body 1, the signal of the start of the lens grinding is transmitted to the control device 26. Thereafter, before the spectacle lens is started to be ground by the grinding stone (not shown) in the lens grinding device main body 1, the control device 26 operates the water supplying and discharging pump 20.

After the grinding water in the primary tank 3 is sucked by the water supplying and discharging pump 20 via the draining pipe 15, the grinding water is supplied to the filter 13f in the filtering device 13 via the water discharging pipe 20b. Due to a discharge pressure of the water supplying and discharging pump 20, the grinding is filtered by the filter 13f and flows into the grinding water collecting tank 14, whereafter the grinding water is supplied to the grinding water spraying nozzle (not shown) in the lens grinding device main body 1, via the grinding water pipe 34, the electromagnetic selector valve 35, the grinding water pipe 23, the flow regulating valve 24, and the grinding water pipe 25.

Thereafter, the grinding water is sprayed from the grinding water spraying nozzle; and in such a case, the spectacle lens is started to be ground by the grinding stone in the lens grinding device main body 1. The grinding water is sprayed from the grinding water spraying nozzle to the grinding part including the grinding stone, whereby the grinding water cools the grinding part including the grinding stone and simultaneously washes away the grinding chips generated at the grinding part.

Together with the grinding water, the washed-away grinding chips flow into the primary tank 3 via the water draining hose 2. Thereafter, the grinding water in the primary tank 3 is sucked by the water supplying and discharging pump 20 via the draining pipe 15 and then is circulated.

Accompanied by the circulation of the grinding water, the control device 26 operates the exhaust fan (air blower) 8c of the deodorization device 8. The resultant intake negative pressure generated by the exhaust fan operates on the upper part of the water-air separator 4 via the pipe 8a and the cylindrical part 4c. Due to this intake negative pressure, the air in the upper part of the primary tank 3 is extracted into the water air separating part 4b of the upper part of the water-air separator 4, through the air guiding pipe 5. The extracted air flows into the water separating space 4d and is rotated along the inner peripheral surface of the water-air separator 4, whereby mist moisture, bubbles or the like contained in the extracted air are adhered to the inner peripheral surface of the water-air separator 4. Thereafter, the adhered moisture or the bubbles flow down along the inner peripheral surface of the water-air separator 4.

Meanwhile, after the mist moisture and the bubbles are eliminated, the air extracted from the upper part of the primary tank 3 still contains the unpleasant odor, generated at the time of the spectacle lens being ground. Such kind of air from the lower part of the cylindrical part 4c is absorbed, via the pipe 8a, by the deodorant 8b in the deodorization device 8. Thus, the unpleasant odor is absorbed and eliminated by the deodorant 8b. Eventually, after the unpleasant odor is eliminated, the air is discharged to the atmosphere.

When grinding the spectacle lens with the grinding stone is completed, a grinding completion signal is input from the lens grinding device main body 1 to the control device 26. Corresponding to the grinding completion signal, the control device 26 terminates the operation of the water supplying and discharging pump 20, accompanied by which the timer 32 is operated. When a predetermined time measured by the timer 32 lapses, the control device 26 terminates the operation of the exhaust fan (air blower) 8c of the deodorization device 8.

In addition, the control device 26 determines the draining mode, the dewatering mode, the water supplying mode, and the deodorization mode respectively, when the 14 and is discharged to the sewer via the grinding water pipe 34, the electromagnetic selector valve 35, and the draining pipe 36.

### (Dewatering operation)

When the dewatering switch 29 is switched on, the control device 26 controls the operation of the electromagnetic selector valve 33, via which the control device 26 establishes the communication between the air supplying pipe 12b and the filter 13f in the filtering device 13, and simultaneously shuts off the communication between the water discharging pipe 20b of the water supplying and discharging pump 20 and the filter 13f in the filtering device 13.

In addition, the control device 26 controls the operation of the electromagnetic selector valve 35, via which the control device 26 shuts off the communication between the grinding water pipes 34 and 23, and simultaneously establishes the communication between the grinding water pipe 34 and the draining pipe 36. Accompanied by such a case, the control device 26 terminates the operation of the water supplying and discharging pump 20. Simultaneously, the control device 26 operates the compressor 12, whereby compressed air operates on the grinding chips in the filter 13f in the filtering device 13, via the air supplying pipe 12b and the electromagnetic selector valve 33.

Thus, the grinding water contained in the grinding chips is pressed out into the grinding water collecting tank 14 by the compressed air. The dewatered grinding chips can be discarded by pulling out the filter 13f from the filtering device 13.

As illustrated above, according to an embodiment of the present invention, the device for treating the grinding water is capable of maintaining the separation capability of draining switch 28, the dewatering switch 29, the water supplying switch 30, and the deodorization switch 31 are switched on respectively. Among the draining mode, the dewatering mode and the water supplying mode, any two of the modes cannot be executed simultaneously. The deodorization mode can be executed independently of any one of the above-mentioned three modes.

### (Draining operation)

When the draining switch 28 is switched on, the control device 26 controls the operation of the electromagnetic selector valve 33, via which the control device 26 makes the water discharging pipe 20b of the water supplying and discharging pump 20 communicate with the filter 13f in the filtering device 13, and simultaneously shuts off the communication between the water discharging pipe 20b of the water supplying and discharging pump 20 and the air supplying pipe 12b.

In this case, the control device 26 controls the operation of the electromagnetic selector valve 35, via which the control device 26 shuts off the communication between the draining pipe 36 and the grinding water pipe 23, and simultaneously establishes the communication between the draining pipe 36 and the grinding water pipe 34. Thus, the communication between the grinding water collecting tank 14 and the draining pipe 36 is established.

Furthermore, when the draining switch 28 is switched on, the control device 26 operates the water supplying and discharging pump 20, whereby the water supplying and discharging pump 20 supplies the grinding water in the primary tank 3 to the filter 13f in the filtering device 13. Meanwhile, after the grinding water in the filtering device 13 is filtered by the filter 13f, the grinding water flows into the grinding water collecting tank grinding chips and water and grinding chips treatment workability. Meanwhile, the workability of the grinding water exchange performed when the spectacle lens is ground, the bubble treatment capability, and the maintenance workability are enhanced. In addition, the cyclone type water-air separator 4 is provided to prevent the grinding water and the bubbles from entering into the deodorization device 8, whereby the grinding water containing the grinding chips can be prevented from leaking out of the deodorization device 8. Thus, the device for treating the grinding water can securely and automatically prevent environmental pollution.

In addition, the water level sensor 7 is provided in the water-air separator 4 to detect the grinding water amount in a circulation cycle (the water level of the grinding water containing the grinding chips); the control device 26 is provided to control the grinding water amount in the circulation cycle; the solenoid open / close valve 10 is arranged to supply water for the circulation thereof; and the electromagnetic selector valves 21, 35, etc. are arranged. Thus, only by pressing the switches of the control device 26 can the operations of water supply, water draining, dewatering, etc. be executed.

Meanwhile, the cyclone type water-air separator 4 is provided to prevent the grinding water and the bubbles from entering into the deodorization device 8, whereby the grinding water containing the grinding chips can be prevented from leaking out of the deodorization device 8. Thus, the device for treating the grinding water can securely and automatically prevent environmental pollution.

As illustrated above, according to the present invention, the method of treating the grinding water of the lens grinding device is provided, wherein the grinding water is circulated by the water supplying and discharging pump 20, via the primary tank 3 (the grinding water tank), the filtering device 13, and the lens grinding device main body 1, and the water level of the primary tank 3 is detected. Thus, the amount of the grinding chips in the circulation cycle of the grinding water is detected and the amount of the grinding water in the circulation cycle is controlled.

With the use of the method of treating the grinding water, the satisfactory separation capability of the grinding chips and water and the satisfactory grinding chips treatment can be maintained. Meanwhile, the workability of the grinding water exchange, the bubble treatment capability, and the maintenance are enhanced.

In addition, according to the method of treating the grinding water of the lens grinding device illustrated in the first and the second embodiments of the present invention, the water level sensor 7 is provided in the water-air separator 4, to detect the amount of the grinding water in the circulation cycle (the water level of the grinding water containing the grinding chips); the control device 26 is provided to control the amount of the grinding water in the circulation cycle; the solenoid open / close valve 10 is arranged to supply water for the circulation thereof; and the electromagnetic selector valves 21, 35, etc. are arranged. Thus, only by pressing the switches of the control device 26 can the operations of water supply, water draining, dewatering, etc. be executed.

According to the simple configuration illustrated in the first and the second embodiments of the present invention, water, serving as the grinding water, can be supplied to the primary tank 3 only in a necessary amount. Furthermore, since the water level sensor 7 is arranged in the water-air separator 4, even if the water surface of the primary tank 3 sways when water is supplied to the primary tank 3, the grinding water amount of the primary tank 3 can be securely detected unsusceptible of the sway of the water surface.

In addition, according to an embodiment of the present invention, with the use of the method of treating the grinding water, the grinding water and the bubbles can be prevented from entering the deodorization device 8.

According to an embodiment of the present invention, with the configurations of the device for treating the grinding water in the lens grinding device, the grinding water and the bubbles can be prevented from entering the deodorization device 8.

According to the present invention, the device for treating the grinding water of the lens grinding device is configured to circulate the grinding water by the water supplying and discharging pump 20, via the primary tank 3, the filtering device 13, and the lens grinding device main body 1. Meanwhile, the water level of the primary tank 3 is detected. Thus, the amount of the grinding chips in the circulation cycle is detected and the amount of the grinding water in the circulation cycle is controlled.

According to an embodiment of the present invention, the device for treating the grinding water of the lens grinding device is capable of maintaining the satisfactory separation capability of the grinding chips and water and the satisfactory grinding chips treatment workability. Meanwhile, the device for treating the grinding water of the lens grinding device is also capable of enhancing the workability of the grinding water exchange, the bubble treatment capability, and the maintenance.

In addition, according to the device for treating the grinding water of the lens grinding device illustrated in the first and the second embodiments of the present invention, the water level sensor 7 is provided in the water-air separator 4, to detect the amount of the grinding water in the circulation cycle (the water level of the grinding water containing the grinding chips); the control device 26 is provided to control the amount of the grinding water in the circulation cycle; the solenoid open / close valve 10 is arranged to supply water for the circulation thereof; and the electromagnetic selector valves 21, 35, etc. are arranged. Thus, only by pressing the switches of the control device 26 can the operations of water supply, water draining, dewatering, etc. be executed.

According to the simple configuration illustrated in the first and the second embodiments of the present invention, water, serving as the grinding water, can be supplied to the primary tank 3 only in a necessary amount. Furthermore, since the water level sensor 7 is arranged in the water-air separator 4, even if the water surface of the primary tank 3 sways when water is supplied to the primary tank 3, the grinding water amount of the primary tank 3 can be securely detected unsusceptible of the sway of the water surface.

In addition, according to an embodiment of the present invention, in the device for treating the grinding water of the lens grinding device, the cyclone type water-air separator 4 is provided to prevent the grinding water and the bubbles from entering into the deodorization device 8.

According to an embodiment of the present invention, with the configurations of the device for treating the grinding water of the lens grinding device, the grinding water and the bubbles can be prevented from entering the deodorization device 8.

According to an embodiment of the present invention, some effects can be obtained as follows. With the use of the method of treating the grinding water, the device for treating the grinding water of the lens grinding device maintains satisfactory separation capability of the grinding chips and water and the satisfactory grinding chips treatment. Meanwhile, the workability of the grinding water exchange, the bubble treatment capability, and the maintenance are enhanced.

Although the present invention has been described in terms of exemplary embodiments, it is not limited thereto. It should be appreciated that changes and modifications can be made to the embodiments by persons skilled in the art as long as they fall under the scope of the appended claims.

## Claims

1. A method of treating grinding water of a lens grinding device, comprising:
circulating the grinding water along a circulation path from a grinding water tank (3) via a filtering device (13) to a lens grinding device main body (1) by means of a pump (20); and
detecting a water level in the grinding water tank (3), which varies corresponding to an amount of grinding chips in the circulation path of the grinding water
**characterized in that** the step of detecting the water level of the grinding water tank (3) includes;
feeding air containing bubbles generated in the grinding water tank (3) into a water-air separator (4) arranged in the vicinity of the grinding water tank (3) side by side, whereby the lower part of the grinding water tank (3) is connected to the lower part of the water-air separator (4) by a connecting pipe (6), whose diameter is small;
eliminating mist moisture and the bubbles from the fed air by the water-air separator (4) and then flowing them down along the inner surface of the water-air separator (4); and
detecting the water level of the grinding water tank (3) by detecting the water level in the water-air separator (4) with a water level sensor (7) arranged in the middle of the water-air separator (4) in the vertical direction thereof.

2. The method according to claim 1,
further comprising controlling an amount of the grinding water in the circulation path.

3. The method according to claim 2, further comprising:
controlling a water amount in the circulation path after an amount of water containing grinding chips in the circulation path is detected based on the water level in the water-air separator (4) detected by the water level sensor (7);
supplying and draining water into and from the circulation path via an electromagnetic valve (10) directly connected to waterworks and a water draining selector valve (21, 35), respectively; and
operating a control panel to indicate operations including a water supplying operation and a water draining operation, via pressing switches provided on the control panel.

4. The method according to any one of claims 1 to 3,
further comprising separating water and air to eliminate water and bubbles centrifugally from air extracted by a deodorization device (8) , used to deodorize the grinding water.

5. A device for treating grinding water of a lens grinding device, comprising:
a grinding water tank (3);
a filtering device (13) to filter the grinding water;
a lens grinding device main body (1); and
a pump (20) to circulate the grinding water along a circulation path from a grinding water tank (3) via a filtering device (13) to a lens grinding device main body (1);
**characterized in that** the device further comprises:
a water-air separator (4) arranged in the vicinity of the grinding water tank (3) side by side; and
the lower part of the grinding water tank (3) is connected to the lower part of the water-air separator (4) by a connecting pipe (6), whose diameter is small; and
a water level sensor (7) arranged in the middle of the water-air separator (4) in the vertical direction thereof,
wherein a water level of the grinding water tank (3), which varies corresponding to an amount of grinding chips in the circulation path of the grinding water, can be detected by detecting the water-level in the water-air separator (4) with the water level sensor (7).

6. The device for treating the grinding water of the lens grinding device according to claim 5, wherein a control device (26) is further provided to control an amount of the grinding water in the circulation path.

7. The device for treating the grinding water of the lens grinding device according to claim 6, further comprising:
a control device (26) to control a water amount in the circulation path of the grinding water, after the water amount containing grinding chips in the circulation path is detected based on an output of the water level sensor (7);
an electromagnetic valve (10) directly connected to waterworks, and a water draining selector valve (21, 35), to supply and drain water into and from the circulation path, respectively; and
a control panel to be operated to indicate operations including a water supplying operation and a water draining operation, by pressing switches thereon;
wherein an upper part of the grinding water tank (3) and an upper part of the water-air separation tank (4) are connected to one another by an air guiding pipe (5).

8. The device for treating the grinding water of the lens grinding device according one of claims 5 to 7, wherein the water-air separation device (4) for eliminating water and bubbles centrifugally from air extracted by a deodorization device (8) used to deodorize the grinding water, operates in a cyclonic manner.

## Patentansprüche

1. Verfahren zur Behandlung von Schleifwasser einer Linsenschleifvorrichtung, umfassend
- Umlaufenlassen des Schleifwassers mittels einer Pumpe (20) über einen Umlaufweg von einem Schleifwassertank (3) über eine Filtervorrichtung (13) zum Hauptteil (1) der Linsenschleifvorrichtung und
- Ermitteln des Wasserstands im Schleifwassertank (3), der sich entsprechend dem Anteil an Schleifspänen im Umlaufweg des Schleifwassers verändert,
- **dadurch gekennzeichnet, dass** der Schritt der Ermittlung des Wasserstands im Schleifwassertank (3) umfasst:
- Einspeisen von Luft enthaltenden Blasen, erzeugt im Schleifwassertank (3), in einen in der Nachbarschaft des Schleifwassertanks (3) seitlich neben diesem angeordneten Wasser-Luft-Separator (4), wobei der untere Teil des Schleifwassertanks (3) mit dem unteren Teil des Wasser-Luft-Separators (4) mittels eines Verbindungsrohrs (6) mit kleinem Durchmesser verbunden ist,
- Entfernen von Feuchtigkeitsnebel und Blasen aus der eingespeisten Luft mittels des Wasser-Luft-Separators (4) und Abfließenlassen von diesen an der Innenfläche des Wasser-Luft-Separators (4) und
- Ermitteln des Wasserspiegels im Schleifwassertank (3) durch Ermitteln des Wasserspiegels im Wasser-Luft-Separator (4) mit einem Wasserspiegelfühler (7), der senkrecht in der Mitte des Wasser-Luft-Separators (4) angeordnet ist.

2. Verfahren nach Anspruch 1, ferner die Regelung der Menge des Schleifwassers im Umlaufweg umfassend.

3. Verfahren nach Anspruch 2, ferner umfassend:
- Regelung der Wassermenge im Umlaufweg nachdem der Schleifspäne enthaltende Wasseranteil im Umlaufweg auf der Grundlage des vom Wasserspiegelfühler (7) im Wasser-Luft-Separator (4) festgestellten Wasserspiegels ermittelt wurde,
- Einspeisen von Wasser in den und Ablassen von Wasser aus dem Umlaufweg über ein elektromagnetisches Ventil (10), das direkt mit der Wasserversorgung verbunden ist, bzw. ein Wasserablaufventil (21,35) und
- Betreiben eines Steuerpults zum Anzeigen des Ablaufs einschließlich des Einspeisens und des Ablassens von Wasser durch Drücken von Schaltern, die auf dem Steuerpult vorgesehen sind.

4. Verfahren nach einem der Ansprüche 1-3, ferner umfassend die Trennung von Wasser und Luft, um Wasser und Blasen durch Zentrifugalkraft aus der Luft zu entfernen, die von einer zum Desodorieren des Schleifwassers dienenden Desodoriervorrichtung (8) abgesaugt wird.

5. Vorrichtung zur Behandlung von Schleifwasser einer Linsenschleifvorrichtung, umfassend:
- einen Schleifwassertank (3),
- eine Filtervorrichtung (13) zum Filtrieren des Schleifwassers,
- ein Hauptteil (1) der Linsenschleifvorrichtung und
- eine Pumpe (20) zum Umlaufenlassen des Schleifwassers über einen Umlaufweg vom Schleifwassertank (3) über die Filtervorrichtung (13) zum Hauptteil (1) der Linsenschleifvorrichtung, **dadurch gekennzeichnet, dass**
- seitlich neben dem Schleifwassertank (3) ein Wasser-Luft-Separator (4) angeordnet ist und
- der untere Teil des Schleifwassertanks (3) mit dem unteren Teil des Wasser-Luft-Separators (4) durch ein Verbindungsrohr (6) mit kleinem Durchmesser verbunden ist und
- in der Mitte des Wasser-Luft-Separators (4) ein Wasserspiegelfühler (7) in senkrechte Ausrichtung angebracht ist,
- wobei der Wasserspiegel des Schleifwassertanks (3), der sich je nach dem Anteil von Schleifspänen im Umlaufweg des Schleifwassers ändert, durch Ermitteln des Wasserspiegels im Wasser-Luft-Separator (4) mittels des Wasserspiegelfühlers (7) festgestellt werden kann.

6. Vorrichtung zur Behandlung von Schleifwasser einer Linsenschleifvorrichtung nach Anspruch 5, wobei ferner eine Regelungsvorrichtung (26) zur Regelung der Wassermenge im Umlaufweg vorgesehen ist.

7. Vorrichtung zur Behandlung von Schleifwasser einer Linsenschleifvorrichtung nach Anspruch 6, ferner umfassend
- eine Regelungsvorrichtung (26) zur Regelung der Wassermenge im Umlaufweg des Schleifwassers, nachdem der Schleifspäne enthaltende Wasseranteil im Umlaufweg auf der Grundlage des Ausgangssignals des Wasserspiegelfühlers (7) ermittelt wurde,
- ein elektromagnetisches Ventil (10), das direkt mit der Wasserversorgung verbunden ist, und ein Wasserablassventil (21,35), um Wasser in den Umlaufweg einzuspeisen bzw. aus diesem abzulassen und
- ein Steuerpult zum Betreiben der Anzeige des Ablaufs einschließlich des Einspeisens von Wasser und des Ablassens von Wasser durch Drücken von Schaltern auf diesem,
- worin der obere Teil des Schleifwassertanks (3) und der obere Teil des Wasser-Luft-Separatortanks (4) miteinander durch ein Luftrohr (5) verbunden sind.

8. Vorrichtung zur Behandlung von Schleifwasser einer Linsenschleifvorrichtung nach einem der Ansprüche 5-7, wobei der Wasser-Luft-Separator (4) zum Entfernen von Wasser und Blasen durch Zentrifugalkraft aus der Luft, die von einer zum Desodorieren des Schleifwasser verwendeten Desodorieren und Vorrichtung (8) abgesaugt wird, nach Art eines Zyklons arbeitet.

## Revendications

1. Procédé pour traiter l'eau de meulage d'un dispositif de meulage de verre de lunettes, comprenant les étapes consistant à :
faire circuler l'eau de meulage le long d'une trajectoire de circulation à partir d'un réservoir d'eau de meulage (3) via un dispositif de filtration (13) jusqu'à un corps principal du dispositif de meulage de verre de lunettes (1) au moyen d'une pompe (20) ; et
détecter un niveau d'eau dans le réservoir d'eau de meulage (3), qui varie en correspondance à une quantité de copeaux de meulage dans la trajectoire de circulation de l'eau de meulage,
**caractérisé en ce que** l'étape consistant à détecter le niveau d'eau du réservoir d'eau de meulage (3) comprend les étapes consistant à :
amener les bulles contenant de l'air générées dans le réservoir d'eau de meulage (3) dans un séparateur d'eau-air (4) agencé à proximité du réservoir d'eau de meulage (3) côte à côte, moyennant quoi la partie inférieure du réservoir d'eau de meulage (3) est raccordée à la partie inférieure du séparateur d'eau-air (4) par un tuyau de raccordement (6) dont le diamètre est petit ;
supprimer le mélange d'humidité et de bulles de l'air alimenté par le séparateur d'eau-air (4) et les laisser ensuite s'écouler le long de la surface interne du séparateur d'eau-air (4) ; et
détecter le niveau d'eau du réservoir d'eau de meulage (3) en détectant le niveau d'eau dans le séparateur d'eau-air (4) avec un capteur de niveau d'eau (7) agencé au milieu du séparateur d'eau-air (4) dans sa direction verticale.

2. Procédé selon la revendication 1, comprenant en outre l'étape consistant à commander une quantité d'eau de meulage dans la trajectoire de circulation.

3. Procédé selon la revendication 2, comprenant en outre les étapes consistant à :
commander une quantité d'eau dans la trajectoire de circulation après qu'une quantité d'eau contenant des copeaux de meulage dans la trajectoire de circulation a été détectée en fonction du niveau d'eau dans le séparateur d'eau-air (4) détecté par le capteur de niveau d'eau (7) ;
amener et évacuer l'eau dans et de la trajectoire de circulation via une soupape électromagnétique (10) raccordée directement à la station de production d'eau et un clapet sélecteur d'évacuation d'eau (21, 35), respectivement ; et
actionner un panneau de commande pour indiquer les opérations comprenant une opération d'alimentation d'eau et une opération d'évacuation d'eau, en appuyant sur des commutateurs prévus sur le panneau de commande.

4. Procédé selon l'une quelconque des revendications 1 à 3, comprenant en outre l'étape consistant à séparer l'eau et l'air pour supprimer l'eau et les bulles par centrifugation de l'air extrait par un dispositif de désodorisation (8), utilisé pour désodoriser l'eau de meulage.

5. Dispositif pour traiter l'eau de meulage d'un dispositif de meulage de verre de lunettes, comprenant :
un réservoir d'eau de meulage (3) ;
un dispositif de filtration (13) pour filtrer l'eau de meulage ;
un corps principal de dispositif de meulage de verre de lunettes (1) ; et
une pompe (20) pour faire circuler l'eau de meulage le long d'une trajectoire de circulation à partir d'un réservoir d'eau de meulage (3) via un dispositif de filtration (13) jusqu'à un corps principal de dispositif de meulage de verre de lunettes (1) ;
**caractérisé en ce que** le dispositif comprend en outre :
un séparateur d'eau-air (4) agencé à proximité du réservoir d'eau de meulage (3), côte à côte ; et
la partie inférieure du réservoir d'eau de meulage (3) est raccordée à la partie inférieure du séparateur d'eau-air (4) par un tuyau de raccordement (6), dont le diamètre est petit ; et
un capteur de niveau d'eau (7) agencé au milieu du séparateur d'eau-air (4) dans sa direction verticale,
dans lequel un niveau d'eau du réservoir d'eau de meulage (3), qui varie proportionnellement à une quantité de copeaux de meulage dans la trajectoire de circulation de l'eau de meulage, peut être détecté en détectant le niveau d'eau dans le séparateur d'eau-air (4) avec le capteur de niveau d'eau (7).

6. Dispositif pour traiter l'eau de meulage du dispositif de meulage de verre de lunettes selon la revendication 5, dans lequel un dispositif de contrôle (26) est en outre prévu pour commander une quantité d'eau de meulage dans la trajectoire de circulation.

7. Dispositif pour traiter l'eau de meulage du dispositif de meulage de verre de lunettes selon la revendication 6, comprenant en outre :
un dispositif de commande (26) pour commander une quantité d'eau dans la trajectoire de circulation de l'eau de meulage, après que la quantité d'eau contenant des copeaux de meulage dans la trajectoire de circulation a été détectée en fonction d'un résultat du capteur de niveau d'eau (7) ;
une soupape électromagnétique (10) directement raccordée à la station de production d'eau, et un clapet sélecteur d'évacuation d'eau (21, 35), pour amener et évacuer l'eau dans et de la trajectoire de circulation, respectivement ; et
un panneau de commande à actionner pour indiquer des opérations comprenant une opération d'alimentation d'eau et une opération d'évacuation d'eau, en appuyant sur des commutateurs situés sur ce dernier ;
dans lequel une partie supérieure du réservoir d'eau de meulage (3) et une partie supérieure du réservoir de séparation d'eau-air (4) sont raccordées entre elles par un tuyau de guidage d'air (5).

8. Dispositif pour traiter l'eau de meulage du dispositif de meulage de verre de lunettes selon l'une quelconque des revendications 5 à 7, dans lequel le dispositif de séparation d'eau-air (4) pour éliminer l'eau et les bulles par centrifugation de l'air extrait par un dispositif de désodorisation (8) utilisé pour désodoriser l'eau de meulage, fonctionne d'une manière cyclonique.
